(19) Europäisches Patentamt / European Patent Office / Office européen des brevets

(11) **EP 2 305 424 B1**

(12) **FASCICULE DE BREVET EUROPEEN**

(45) Date de publication et mention
de la délivrance du brevet:
**15.02.2012 Bulletin 2012/07**

(51) Int Cl.:
**B24B 9/14** *(2006.01)* **G02C 13/00** *(2006.01)*

(21) Numéro de dépôt: **10290467.9**

(22) Date de dépôt: **01.09.2010**

(54) **Méthode d'élaboration d'une consigne de détourage d'une lentille ophtalmiqiue**

Verarbeitungsmethode eines Sollwerts zum Konturfräsen einer Sehlinse

Method for creating a setting for trimming an ophthalmic lens

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **14.09.2009 FR 0904382**

(43) Date de publication de la demande:
**06.04.2011 Bulletin 2011/14**

(73) Titulaire: **Essilor International
(Compagnie Générale d'Optique)
94220 Charenton-le-Pont (FR)**

(72) Inventeurs:
• **Dubois, Frédéric
94220 Charenton Le Pont (FR)**
• **Freson, David
94220 Charenton Le Pont (FR)**
• **Belloni, Eric
94220 Charenton Le Pont (FR)**

(74) Mandataire: **Chauvin, Vincent et al
Coralis
14 rue Ballu
75009 Paris (FR)**

(56) Documents cités:
**EP-A1- 1 642 678 FR-A1- 2 894 504
US-A1- 2007 213 861**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE AUQUEL SE RAPPORTE L'INVENTION

La présente invention concerne de manière générale la préparation de lentilles ophtalmiques en vue de leur emboîtement dans des entourages de montures de lunettes cerclées ou semi-cerclées.

ARRIÈRE-PLAN TECHNOLOGIQUE

La partie technique du métier de l'opticien consiste à monter une paire de lentilles ophtalmiques correctrices sur une monture de lunettes sélectionnée par un porteur.
Ce montage se décompose en trois opérations principales :

- l'acquisition des contours des entourages de la monture de lunettes sélectionnée,
- le centrage de chaque lentille qui consiste à positionner et à orienter convenablement les contours acquis par rapport aux lentilles de manière qu'une fois assemblée, chaque lentille se trouve centrée sur la pupille de l'oeil correspondant du porteur, puis
- l'usinage de chaque lentille qui consiste à la découper selon ce contour.

Dans le cadre de la présente invention, on s'intéresse plus particulièrement aux montures de lunettes à entourages, c'est-à-dire aux montures de lunettes cerclées et semi-cerclées.
L'objectif concret de l'opticien est alors de découper la lentille ophtalmique de manière à ce qu'elle puisse mécaniquement et esthétiquement s'adapter à la forme de l'entourage correspondant de la monture sélectionnée, tout en s'assurant que cette lentille exerce au mieux la fonction optique pour laquelle elle a été conçue.
L'opération d'usinage comprend en particulier, dans le cas des montures cerclées, une étape de biseautage permettant de former sur la tranche de la lentille une nervure d'emboîtement, communément appelée biseau, apte à s'emboîter dans une rainure, communément appelée drageoir, qui court le long de la face intérieure de l'entourage correspondant de la monture.
L'opération d'usinage comporte en revanche, dans le cas des montures semi-cerclées, une étape de rainage permettant de former sur la tranche de la lentille une rainure d'emboîtement. Lors du montage, cette rainure d'emboîtement s'engagé sur une nervure qui court le long de la face intérieure du demi-cercle (ou « arcade ») correspondant de la monture. La lentille ophtalmique est alors maintenue en appui contre cette arcade à l'aide d'un fil qui s'engage dans la rainure d'emboîtement et dont les extrémités se raccordent aux extrémités de l'arcade.
Les opérations d'acquisition et d'usinage doivent être réalisées avec soin de manière que la lentille puisse parfaitement s'emboîter dans son entourage, sans effort et « du premier coup », c'est-à-dire sans nécessiter de reprise d'usinage (dans le cas des montures cerclées ou semi-cerclées) ou de mise à longueur du fil (dans le cas des montures semi-cerclées).
Pour acquérir la forme de l'entourage, on utilise généralement un appareil de lecture de contours comportant un palpeur qui vient relever la forme du drageoir de l'entourage ou de la rainure d'un gabarit représentatif de la forme de l'entourage. On constate toutefois, à l'issue de ce palpage, des erreurs de relèvement inhérentes au fonctionnement de l'appareil de lecture. On observe aussi, à l'issue de l'opération d'usinage, des erreurs d'usinage également inhérentes au fonctionnement de l'appareil de détourage.
Malgré le soin apporté à ces opérations pour réduire ces erreurs, on observe que certaines lentilles ophtalmiques demeurent difficilement montables dans leurs entourages. In est alors nécessaire, pour écarter tout risque de déboîtement de la lentille hors de son entourage, de reprendre l'usinage de la lentille et/ou de modifier la longueur du fil nylon, ce qui s'avère fastidieux à réaliser.
A titre de comparaison, le document EP-A-1642678 divulgue un procédé de l'art antérieur pour l'élaboration d'une consigne de détourage d'une lentille ophtalmique en vue de son montage dans un entourage d'une monture de lunette.

OBJET DE L'INVENTION

Afin de remédier aux inconvénients précités de l'état de la technique, la présente invention propose une méthode d'élaboration d'une consigne de détourage d'une lentille ophtalmique, permettant de prévoir et de prévenir d'éventuelles difficultés de montage des lentilles ophtalmiques dans leur entourage.
Plus particulièrement, on propose selon l'invention une méthode d'élaboration d'une consigne de détourage comportant les étapes consistant à :

a) acquérir la forme d'un premier profil longitudinal dudit entourage,

b) construire, sur une projection plane dudit premier profil longitudinal, au moins deux figures géométriques prédéterminées, en ajustant leurs dimensions à celles de ladite projection plane,

c) calculer des écarts entre la projection plane dudit premier profil longitudinal et chacune desdites figures géométriques prédéterminées,

d) parmi des figures géométriques cibles à chacune desquelles est associé un paramètre de détourage, sélectionner la figure géométrique cible la plus proche du premier profil longitudinal en fonction desdits écarts,

e) calculer ladite consigne de détourage en fonction de la forme du premier profil longitudinal et du paramètre de détourage associé à la figure géométrique cible sélectionnée.

La demanderesse a observé qu'une partie des difficultés de montage provenaient de la forme des entourages des montures de lunettes sélectionnées.

Elle a en particulier observé que la forme allongée de certaines montures était à l'origine de ces difficultés.

Ces difficultés résultent du fait que la pression de l'entourage sur la lentille ophtalmique n'est pas uniformément répartie sur de telles montures de lunettes. En effet, plus l'entourage est allongé, plus la pression sur les parties nasale et temporale de l'entourage est importante, ce qui rend le montage difficile. En outre, plus l'entourage est allongé, plus la pression sur les parties basse et haute de l'entourage est faible, ce qui peut provoquer le déboîtement de la lentille.

Selon l'invention, la méthode permet de caractérise la forme du contour de l'entourage, afin de prévoir les difficultés d'emboîtement qui peuvent se poser, de manière à pouvoir y remédier dès le premier usinage de la lentille. Cette méthode permet donc d'éviter d'avoir à reprendre l'usinage de la lentille ou d'avoir à modifier la longueur du fil (dans le cas des montures semi-cerclées).

D'autres caractéristiques avantageuses et non limitatives de la méthode conforme à l'invention sont les suivantes :

- à l'étape e), d'une part, on détermine la forme spatiale d'un second profil longitudinal issu de la projection dudit premier profil longitudinal sur une surface caractéristique de ladite lentille ophtalmique, et, d'autre part, on déforme le second profil longitudinal suivant deux directions différentes, avec des coefficients de déformation appliqués à chaque direction dont l'un au moins est fonction du paramètre de détourage associé à la la figure géométrique cible sélectionnée, de manière à égaliser la longueur périmétrique dudit second profil longitudinal avec la longueur périmétrique dudit premier profil longitudinal, et on déduit du second profil longitudinal déformé une consigne d'ébauche de détourage de la lentille ophtalmique ;
- ladite surface caractéristique est la face avant ou arrière de la lentille ophtalmique ;
- ladite surface caractéristique est une surface située entre les faces avant et arrière de la lentille ophtalmique et parallèle à l'une de ces faces avant et arrière ;
- à l'étape e), on détermine une consigne de surfinition du détourage de la lentille ophtalmique en fonction du paramètre de détourage associé à la figure géométrique cible sélectionnée ;
- à l'étape b), on construit au moins trois figures géométriques prédéterminées ;
- à l'étape b), lesdites figures géométriques prédéterminées comportent une ellipse et/ou un rectangle et/ou un rectangle aux coins arrondis ;
- à l'étape d), lesdites figures géométriques cibles comportent au moins lesdites figures géométriques prédéterminées ;
- à l'étape b), les dimensions desdites figures géométriques prédéterminées sont ajustées de telle manière que l'une au moins desdites figures géométriques soit circonscrite ou inscrite à la projection plane du premier profil longitudinal ;
- à l'étape b), les dimensions desdites figures géométriques prédéterminées sont ajustées de telle manière que l'écart entre la projection plane du premier profil longitudinal et l'une au moins desdites figures géométriques soit minimal ;
- à l'étape c), lesdits écarts sont calculés en déterminant l'aire de la surface délimitée entre la projection plane du premier profil longitudinal et chacune desdites figures géométriques ;
- la détermination de l'écart entre la projection plane du premier profil longitudinal et chaque figure géométrique comporte les opérations consistant à calculer en coordonnée polaires des fonctions représentatives de ladite projection plane et de chaque figure géométrique, puis à calculer les séries de fourrier associées à ces fonctions représentatives, puis à calculer les descripteurs ($FD_{n40}$, $FD_{n41}$, $FD_{n42}$, $FD_{n43}$) desdites séries de fourrier, et enfin à déduire lesdits écarts desdits descripteurs ;
- à l'étape d), on calcule le rapport desdits écarts, et on détermine, parmi des intervalles prédéterminés chacun associés à une figure géométrique cible, l'intervalle dans lequel se trouve chaque rapport ;
- à l'étape d), on calcule le rapport de la longueur sur la largeur d'un rectangle circonscrit au premier profil longitudinal, et on sélectionne ladite figure géométrique cible en fonction également dudit rapport ;
- ledit entourage comporte un cercle ou une arcade équipée d'un fil.

L'invention concerne également un procédé de paramétrage d'un dispositif de préparation d'une lentille ophtalmique en vue de son montage dans un entourage d'une monture de lunettes, comportant les opérations consistant à :

- élaborer une consigne de détourage d'une première lentille ophtalmique selon la méthode précitée,
- détourner ladite première lentille ophtalmique suivant la consigne de détourage élaborée,
- mesurer sur la lentille ophtalmique détourée un profil longitudinal courant le long de sa tranche,
- calculer un écart entre la forme du profil longitudinal mesuré et la forme du second profil longitudinal déformé,
- chercher, dans un registre de base de données dont chaque enregistrement est associé à une figure géométrique cible et mémorise un écart moyen, l'enregistrement qui est associé à la figure géométrique cible sélectionnée à l'étape d),
- lire l'écart moyen mémorisé dans ledit enregistrement et le modifier en fonction de l'écart calculé.

Avantageusement alors, pour élaborer la consigne de détourage d'une autre lentille ophtalmique selon la méthode précitée, à l'étape e), on cherche dans le registre de base de données l'enregistrement qui est associé à la figure géométrique cible sélectionnée à l'étape d), on lit l'écart moyen mémorisé dans cet enregistrement, et on calcule le coefficient de déformation du second profil longitudinal en fonction de cet écart moyen lu.

DESCRIPTION DETAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.
Sur les dessins annexés :

- la figure 1 est une vue schématique en perspective d'une monture de lunettes cerclée ;
- la figure 2 est une vue schématique en perspective d'une monture de lunettes semi-cerclée ;
- la figure 3 est une vue schématique en perspective d'une lentille ophtalmique non détourée ;
- la figure 4 est une vue schématique en perspective d'un appareil de lecture de contours ;
- les figures 5 et 6A à 6E montrent des profils longitudinaux représentatifs de la forme d'entourages de montures de lunettes de différentes formes, auxquels sont superposées des figures géométriques caractérisant ces formes, vus en projection dans un plan moyen des entourages de la monture, sensiblement perpendiculaire aux branches ;
- la figure 7 est une vue en perspective du profil longitudinal de la figure 5 et de sa projection sur une face d'une lentille de présentation ;
- la figure 8 est une vue de face de la lentille ophtalmique de la figue 3, dans le plan de la figure 5, sur laquelle est superposé le profil longitudinal de la figure 5 ;
- la figure 9 est une vue en perspective du profil longitudinal de la figure 5, de sa projection sur une face de la lentille ophtalmique de la figure 3, et d'une déformée de cette projection en vue du calcul de la consigne de détourage ;
- les figures 10 et 11 sont des vues dans le plan de la figure 5, illustrant deux étapes de déformation du profil longitudinal projeté de la figure 9.

Monture de lunettes

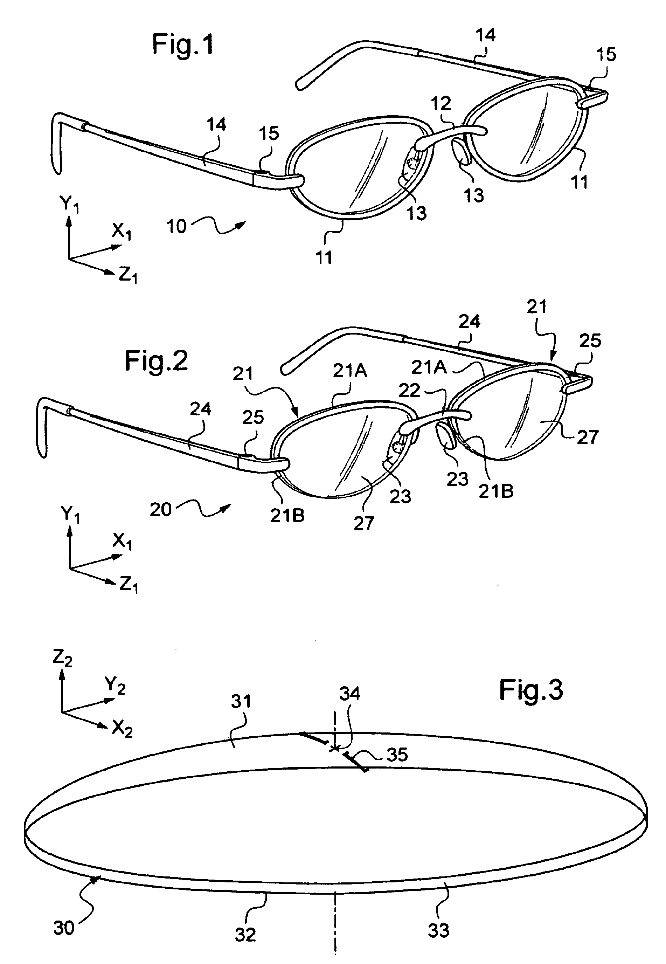

Sur les figures 1 et 2 on a représenté deux montures de lunettes 10, 20 respectivement cerclée et semi-cerclée, comportant chacune deux entourages 11, 21.
Plus particulièrement, sur la figure 1, la monture de lunettes 10 cerclée comporte deux cercles 11 destinés chacun à accueillir une lentille ophtalmique et à être positionnés en regard de l'un des deux yeux du porteur lorsque ce dernier porte ladite monture.
Les deux cercles 11 sont reliés l'un à l'autre par un pont ou pontet 12. Ils sont en outre chacun équipés d'une plaquette nasale 13 apte à reposer sur le nez du porteur et d'une branche 14 apte à reposer sur l'une des oreilles du porteur. Chaque branche 14 est articulée sur le cercle correspondant au moyen d'un barillet 15.
Les deux cercles 11 de la monture de lunettes 10 présentent un bord intérieur dans lequel est ménagée une rainure d'emboîtement, communément appelée drageoir, de section généralement en forme de dièdre.
Les deux cercles 11 présentent une cambrure non nulle. Cette cambrure peut être caractérisée par un rayon de courbure moyen correspondant au rayon de courbure d'une sphère passant par quatre points du drageoir situés à égale distance deux à deux.
Sur la figure 2, les entourages 21 de la monture de lunettes 20 semi-cerclée comportent chacun une arcade 21A (ou « demi-cercle ») et un fil nylon 21B, dont les deux bouts sont raccordés aux extrémités de cette arcade 21A. Ces arcades 21A et fils nylon 21B permettent conjointement de maintenir deux lentilles sur la monture de lunettes 20.
Les deux arcades 21A sont reliées l'une à l'autre par un pontet 22. Chaque arcade 21A est équipée d'une plaquette nasale 23 apte à reposer sur le nez du porteur et d'une branche 24 apte à reposer sur l'une des oreilles du porteur. Chaque branche 24 est articulée sur l'arcade 21A correspondante au moyen d'un barillet 25.

Les deux arcades 21A de la monture de lunettes 20 présentent un bord intérieur sur lequel court une nervure d'emboîtement.

Tel que cela apparaît sur la figure 2, la monture de lunettes 20 porte deux lentilles de présentation 27 livrées à l'opticien avec la monture. Ces deux lentilles de présentation 27 seront utilisées comme gabarit de forme pour détourer les lentilles ophtalmiques à monter sur la monture de lunettes 20.

Les deux entourages 21 présentent une cambrure non nulle. Cette cambrure peut être caractérisée par le rayon de courbure de la face avant sphérique de la lentille de présentation 27.

Lentille ophtalmique

Comme le montre la figure 3, la lentille ophtalmique 30 présente deux faces optiques avant 31 et arrière 32, et une tranche 33.

La face optique avant 31 est ici sphérique et présente un rayon de courbure connu.

La tranche 33 de la lentille présente un contour initial circulaire. La lentille est toutefois destinée à être détourée à la forme de l'entourage 11, 21 correspondant de la monture de lunettes 10, 20, de manière à pouvoir être emboîtée dans celui-ci.

Dans le cas où la monture sélectionnée est cerclée (figure 1), la lentille ophtalmique 30 est plus précisément destinée à être détourée pour présenter sur sa tranche 33 une nervure d'emboîtement (ou biseau) apte à s'emboîter dans le drageoir du cercle 11 correspondant de la monture de lunettes 10.

Dans le cas où la monture sélectionnée est semi-cerclée (figure 2), la lentille ophtalmique 30 est au contraire destinée à être détourée pour présenter sur sa tranche 33 une rainure d'emboîtement qui est apte à être engagée sur la nervure d'emboîtement de l'arcade 21A correspondante de la monture de lunettes et qui est apte à accueillir le fil nylon 21 B.

Cette lentille ophtalmique 30 présente des caractéristiques optiques déterminées en fonction des besoins du porteur de lunettes. Elle présente en particulier des propriétés de réfringence sphérique, cylindrique et prismatique qui sont propres au porteur.

Cette lentille ophtalmique 30 est en outre pourvue de marquages 34, 35 qui permettent un repérage commode du référentiel optique de la lentille ophtalmique 30 pour son montage sur la monture de lunettes 10, 20 sélectionnée par le porteur. Ces marquages consistent ici en des marquages provisoires 34, 35 à l'encre. Ils pourraient en variante consister en des marquages permanents, tels que des micro-gravures.

Ici, ces marquages comportent une croix de centrage 34 permettant de repérer la position du point de centrage de la lentille c'est-à-dire, dans le cas d'une lentille ayant une puissance optique exclusivement sphérique, le point où le rayon incident et le rayon transmis ont même axe.

Il comporte en outre, de part et d'autre de cette croix de centrage 34, deux traits d'horizon 35 repérant l'horizontale de la lentille ophtalmique 30.

On caractérise alors le référentiel optique de la lentille ophtalmique 30 par un repère orthonormé comportant un axe horizontal $X_2$ parallèle auxdits traits d'horizon 35, un axe d'ordonnée $Y_2$, et un axe normal $Z_2$ qui est perpendiculaire au plan tangent à la face avant de la lentille ophtalmique 30 au point de centrage 34.

Terminaux client et fabricant

L'invention présente une avantage particulier lorsque la préparation des lentilles est confiée à des fabricants de lentilles distincts des opticiens, c'est-à-dire lorsque les opticiens agissent en « donneurs d'ordre » qui sous-traitent la fabrication et le détourage des lentilles à de tels fabricants.

Pour illustrer cette configuration, on considérera ici, d'une part, un terminal-client installé du côté d'un opticien pour la commande de lentilles, et, d'autre part, un terminal-fabricant installé du côté d'un fabricant de lentilles pour la fabrication et le détourage de lentilles.

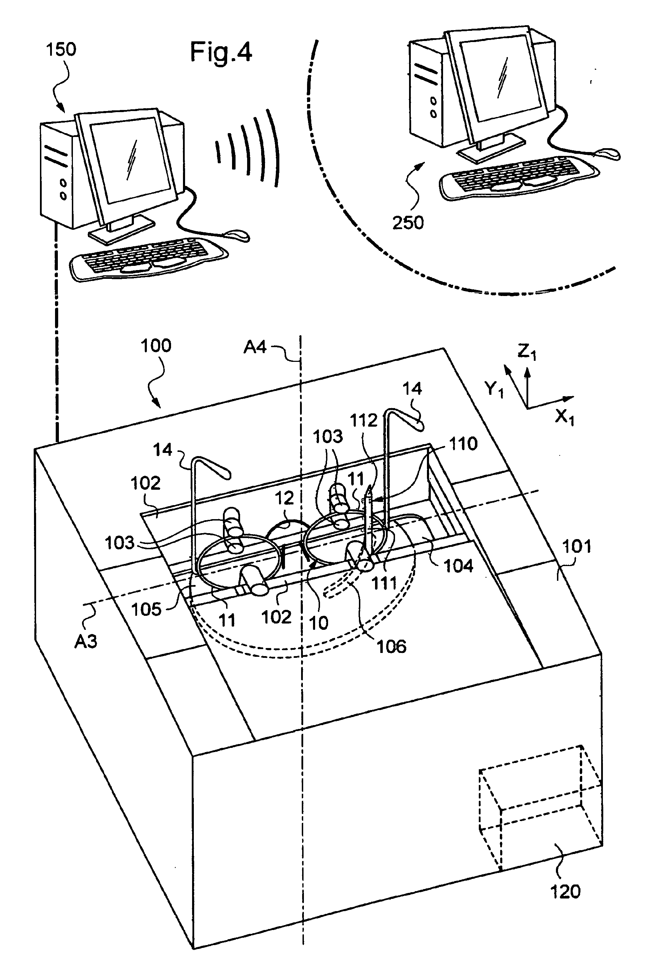

Le terminal-client comporte une unité informatique 150 (figure 4), ici un ordinateur de bureau, pour enregistrer et transmettre des données de commande de lentilles ophtalmiques, par exemple via un protocole de communication par IP (de type Internet). Ces données de commande comportent des données de prescription relatives aux corrections à apporter aux yeux du porteur et des données de forme relatives à la monture de lunettes 10, 20 sélectionnée par le porteur.

Le terminal-fabricant comporte quant à lui une unité informatique 250 pour recevoir, enregistrer et traiter les données de commande transmises par le terminal-client. Il comporte en outre un dispositif de fabrication de lentilles ophtalmiques, comprenant par exemple de moyens de moulage de lentilles conformément aux données de prescription et des moyens de détourage de lentilles conformément aux données de forme.

Appareil de lecture de contours

Dans le terminal-client, l'opticien dispose ici d'un appareil de lecture de contours. Cet appareil de lecture de contours est un moyen bien connu de l'homme du métier et ne fait pas en propre l'objet de l'invention décrite. Il est par exemple possible d'utiliser un appareil de lecture de contours tel que décrit dans le brevet EP 0 750 172 ou commercialisé par Essilor International sous la marque Kappa ou sous la marque Kappa CT.

La figure 4 est une vue générale de cet appareil de lecture de contours 100, tel qu'il se présente à son utilisateur. Cet appareil comporte un capot supérieur 101 recouvrant l'ensemble de l'appareil à l'exception d'une portion supérieure centrale dans laquelle peut être est disposé une monture de lunettes 10 ou une lentille de présentation 27.

L'appareil de lecture de contours 100 est destiné à relever, dans le cas où la monture de lunettes sélectionnée est cerclée, la forme de l'arête de fond du drageoir de chaque cercle 11 de cette monture de lunettes 10. Il est en revanche destiné à relever, dans le cas où la monture de lunettes sélectionnée est semi-cerclée, la forme du contour de chaque lentille de présentation 27.

L'appareil de lecture de contours 100 comporte à cet effet des premiers moyens de blocage d'une monture de lunettes 10 cerclée, et des seconds moyens de blocage d'une lentille de présentation 27.

Les premiers moyens de blocage comportent un jeu de deux mâchoires 102 mobiles l'une par rapport à l'autre pour former un dispositif de serrage. Chacune des mâchoires 102 est munie de deux paires de plots 103 mobiles pour former deux pinces adaptées à serrer la monture de lunettes 10 afin de l'immobiliser.

Les seconds moyens de blocage, non visibles sur les figures, comportent un ergot qui s'étend jusque dans la portion supérieure centrale de l'appareil, et dont l'extrémité supérieure est agencée pour coopérer avec l'une des faces de la lentille de présentation 27, afin de l'immobiliser dans cette portion supérieure centrale.

Dans l'espace laissé visible par l'ouverture du capot 101, un châssis 104 est visible. Une platine (non visible) peut se déplacer en translation sur ce châssis 104 selon un axe de transfert A3. Sur cette platine est monté tournant un plateau tournant 105.

Ce plateau tournant 105 est donc apte à prendre trois positions sur l'axe de transfert A3, dont :

- une première position dans laquelle le centre du plateau tournant 105 est disposé entre les deux paires de plots 103 fixant le cercle droit de la monture de lunettes 10,
- une seconde position dans laquelle le centre du plateau tournant 105 est disposé entre les deux paires de plots 103 fixant le cercle gauche de la monture de lunettes 10, et
- une troisième position intermédiaire dans laquelle le centre du plateau tournant 105 est situé dans l'axe de l'ergot de fixation de la lentille de présentation 27.

Le plateau tournant 105 possède un axe de rotation A4 défini comme l'axe normal à la face avant de ce plateau tournant 105 et passant par son centre. Il est adapté à pivoter autour de cet axe par rapport à la platine. Le plateau tournant 105 comporte par ailleurs une lumière 106 oblongue en forme d'arc de cercle à travers laquelle un palpeur 110 fait saille. Ce palpeur 110 comporte une tige support 111 d'axe perpendiculaire au plan de la face avant du plateau tournant 105 et, à son extrémité libre, un doigt de palpage 112 d'axe perpendiculaire à l'axe de la tige support 111.

Le doigt de palpage 112 est agencé pour suivre par glissement ou éventuellement roulement l'arête de fond du drageoir de chaque cercle 11 de la monture de lunettes 10.

La tige support 111 est quant à elle est agencé pour glisser le long du contour de la lentille de présentation 27.

L'appareil de lecture de forme 100 comporte des moyens d'actionnement (non représentés) adaptés, d'une première part, à faire glisser la tige support 111 le long de la lumière 106 afin de modifier sa position radiale par rapport à l'axe de rotation A4 du plateau tournant 105, d'une deuxième part, à faire varier la position angulaire du plateau tournant 105 autour de son axe de rotation A4, et, de troisième part, à positionner le doigt de palpage 112 du palpeur 110 à une altitude plus ou moins importante par rapport au plan de la face avant du plateau tournant 105.

En résumé, le palpeur 110 est pourvu de trois degrés de liberté, dont un premier degré de liberté p constitué par l'aptitude du palpeur 110 à se mouvoir radialement par rapport à l'axe de rotation A4 grâce à sa liberté de mouvement le long de l'arc de cercle formé par la lumière 106, un deuxième degré de liberté $\theta$ constitué par l'aptitude du palpeur 110 à pivoter autour de l'axe de rotation A4 grâce à la rotation du plateau tournant 105 par rapport à la platine, et un troisième degré de liberté z constitué par l'aptitude du palpeur 110 à se translater selon un axe parallèle à l'axe de rotation A4 du plateau tournant 105.

Chaque point lu par l'extrémité du doigt de palpage 112 du palpeur 110 est repéré dans un référentiel, appelé référentiel de porté de la monture.

Ce référentiel est ici caractérisé par une repère orthonormé comportant un axe horizontal $X_1$ parallèle audit axe de transfert A3, un axe d'ordonnée $Y_1$ orthogonal aux axes de transfert A3 et de rotation A4, et un axe normal $Z_1$.

L'appareil de lecture de contours 100 comporte en outre un dispositif électronique et/ou informatique 120 permettant, d'une part, de piloter les moyens d'actionnement de l'appareil de lecture de forme 100, et, d'autre part, d'acquérir et de transmettre à l'unité informatique 150 les coordonnées de l'extrémité du doigt de palpage 112 du palpeur 110.

Procédé d'élaboration de consignes de détourage

Le procédé de préparation d'une lentille ophtalmique 30 en vue de son montage dans un entourage 11, 21 d'une monture de lunettes 10, 20 comporte deux phases principales, dont une première phase d'élaboration d'une consigne de détourage, et une seconde phase de détourage de la lentille ophtalmique suivant cette consigne de détourage.

La seconde phase de détourage se déroulé généralement en trois opérations successives, dont :

- une opération d'ébauche de détourage qui consiste à ramener le contour initialement circulaire de la lentille ophtalmique à une forme proche de celle désirée, c'est-à-dire à une forme proche de celle de l'entourage de la monture de lunettes sélectionnée,
- une opération de finition qui consiste à former une nervure d'emboîtement ou une rainure d'emboîtement sur la tranche de la lentille ophtalmique en vue de son montage sur une monture de lunettes respectivement cerclée ou semi-cerclée, et,
- une opération de surfinition qui consiste à polir la tranche de la lentille et/ou à chanfreiner ses arêtes vives.

L'invention portant plus précisément sur la première phase d'élaboration de la consigne de détourage, cette seconde phase de détourage bien connue de l'Homme du métier ne sera pas ici décrite plus en détail.

La première phase d'élaboration de la consigne de détourage se décompose en sept opérations successives.

Première opération

La première opération consiste à définir les besoins du porteur de lunettes.

Pour cela, le porteur se rend successivement chez un optométriste et chez un opticien.

L'optométriste procède à différents examens relatifs à l'acuité visuelle du porteur, de manière à déterminer des prescriptions qui permettront de mouler dieux lentilles ophtalmiques adaptées à chacun des yeux du porteur. Il détermine en particulier, le type unifocale, bifocale ou progressif des lentilles ophtalmiques, et les propriétés de réfringence sphérique, cylindrique et prismatique de ces lentilles.

L'opticien propose quant à lui au porteur de sélectionner une monture de lunettes 10, 20 qui lui convient, ici une monture de lunettes cerclée ou semi-cerclée. Il procède ensuite aux mesures nécessaires au centrage des lentilles ophtalmiques sur la monture sélectionnée, de manière qu'une fois assemblées à la monture, les lentilles soient correctement centrées en regard des yeux du porteur afin d'exercer au mieux les fonctions optiques pour lesquelles elles sont conçues.

L'opticien détermine en particulier la position des points pupillaires du porteur dans le référentiel de porté de la monture. Ces points pupillaires correspondent aux points disposés en regard des pupilles du porteur sur les lentilles équipant la monture sélectionnée. Les points pupillaires sont plus particulièrement repérés par rapport au contour de chaque entourage 11, 21 de la monture de lunettes 10, 20 sélectionnée, au moyen de deux paramètres appelés écart pupillaire et hauteur pupillaire. L'écart pupillaire correspond à la plus grande distance horizontale entre le point pupillaire et la zone nasale de l'entourage. La hauteur pupillaire correspond à la plus grande distance verticale entre le point pupillaire et la zone basse de l'entourage.

Seconde opération

La seconde opération consiste à relever les formes des contours des entourages 11, 21 de la monture de lunettes 10, 20 sélectionnée, au moyen d'un appareil de lecture de contours 100 tel que celui représenté sur la figure 4.

Dans un premier temps, la monture de lunettes 10 ou la lentille de présentation 27 est immobilisée dans les premiers ou seconds moyens de blocage de l'appareil de lecture de contours 100.

S'il s'agit d'une monture de lunettes cerclée, cette dernière est immobilisée de telle sorte que chacun de ses cercles 11 est prêt à être palpé selon un trajet qui démarre entre les deux plots 103 enserrant la partie inférieure du cercle 11 correspondant de la monture, et qui suit le drageoir du cercle 11 afin de couvrir toute la circonférence de ce cercle 11.

En position initiale, lorsque le doigt de palpage 112 est disposé entre les deux plots 103, le dispositif électronique et/ou informatique 120 définit comme nulles la position angulaire $\theta_1$, et l'altitude $z_1$ de l'extrémité du doigt de palpage 112 du palpeur 110.

Les moyens d'actionnement font ensuite pivoter le plateau tournant 105 sur une révolution complète. Lors de ce pivotement, les moyens d'actionnement imposent un effort radial constant sur le palpeur 110 en direction du cercle 11, pour que le doigt de palpage 112 du palpeur 110 glisse le long de l'arête de fond du drageoir du cercle 11, sans remonter le long des flancs avant et arrière du drageoir.

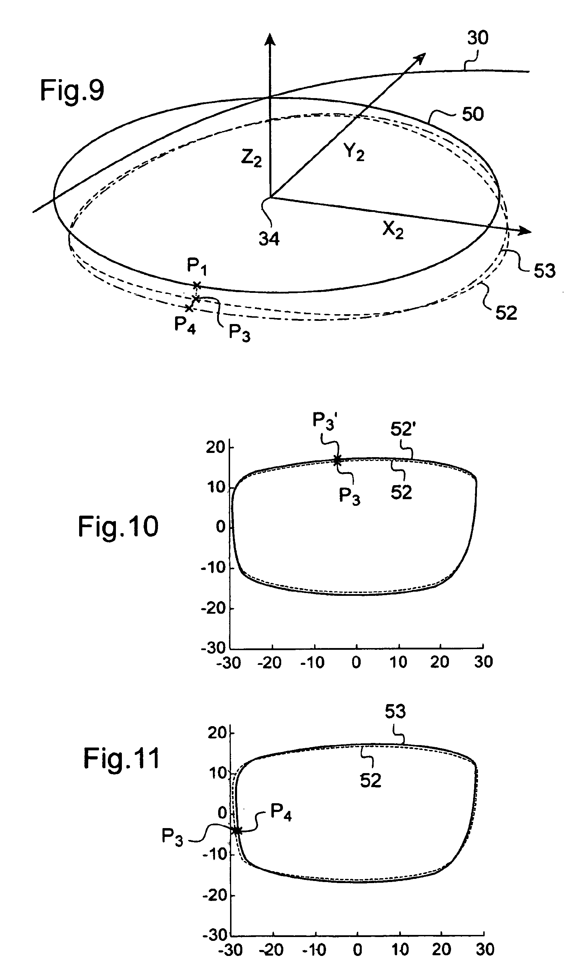

Le dispositif électronique et/ou informatique 120 relève pendant la rotation du plateau tournant 105 les coordonnées spatiales $\rho_1$, $\theta_1$, $z_1$ d'une pluralité de points $P_1$ de l'arête de fond du drageoir (par exemple 360 points séparés angulairement de 1 degré), repérés dans le repère $X_1$, $Y_1$, $Z_1$. Les 360 points palpés $P_1$ correspondent ainsi à la trace de l'arête de fond du drageoir dans 360 sections transversales du cercle 11 séparées angulairement de 1 degré. Comme le montre la figure 9, ces 360 points palpés $P_1$ définissent ainsi un premier profil longitudinal 50 de l'entourage 11, sensiblement confondu avec l'arête de fond du drageoir.

S'il s'agit d'une monture de lunettes semi-cerclée, l'une de ses lentilles de présentation 27 est immobilisée au centre de l'ouverture supérieure centrale du capot 101, de manière à ce que sa tranche puisse être palpée sur l'ensemble de son contour par la tige support 111.

En position initiale, lorsque la tige support 111 est disposé contre la tranche de la lentille de présentation 27, le dispositif électronique et/ou informatique 120 définit comme nulle la position angulaire $\theta_1$ du palpeur 110.

Les moyens d'actionnement font ensuite pivoter le plateau tournant 105. Lors de ce pivotement, les moyens d'actionnement imposent un effort radial constant sur le palpeur 110 en direction de l'axe de rotation A4, pour que la tige support 111 du palpeur 110 reste au contact de la tranche de la lentille de présentation 27.

Le dispositif électronique et/ou informatique 120 relève pendant la rotation du plateau tournant 105 les coordonnées planes $\rho_1$, $\theta_1$ d'une pluralité de points $P_1$ de la tranche de la lentille de présentation 27 (par exemple 360 points séparés angulairement de 1 degré). Ces 360 points palpés $P_1$ définissent ici également un premier profil longitudinal de l'entourage 21 de la monture de lunettes semi-cerclée.

Puis, quel que soit le type cerclé ou semi-cerclé de la monture de lunettes sélectionnée, les coordonnées planes $\rho_1$, $\theta_1$ ou spatiales $\rho_1$, $\theta_1$, $z_1$ des 360 points palpés $P_1$ sont ensuite transmises par le dispositif électronique et/ou informatique 120 à l'unité informatique 150 du terminal-client.

Bien sûr, en variante, les coordonnées du profil longitudinal de l'entourage pourraient être acquises autrement, par exemple par lecture d'un registre de base de données. Un tel registre comporterait à cet effet une pluralité d'enregistrements qui seraient chacun associés à un modèle de montures de lunettes et qui comprendraient chacun les cordonnées d'une pluralité de points caractérisant les formes des entourages de ce modèle de montures de lunettes.

Les coordonnées du profil longitudinal de l'entourage pourraient également être acquises optiquement, à l'aide d'un appareil laser ou d'un appareil de capture et de traitement d'images agencé pour déterminer, à partir d'un cliché de la monture de lunettes sélectionnée, les coordonnées d'une pluralité de points de chacun de ses entourages.

Ici, à l'issue de cette seconde opération, l'unité informatique 150 du terminal-client transmet l'ensemble des données acquises à l'unité informatique 250 du terminal-fabricant. Ces données comportent en particulier les prescriptions du porteur et les coordonnées des 360 points palpés $P_1$.

Ces données sont alors utilisées pour mouler les deux lentilles ophtalmiques du porteur et pour usiner leurs faces optiques à la forme souhaitée, selon des procédés qui ne font pas l'objet de la présente invention.

Elles sont ensuite utilisées pour détourer les lentilles ophtalmiques ainsi obtenues, afin de ramener leurs contours à la forme souhaitée, comme cela sera détaillé dans la suite de cet exposé.

Troisième opération

La troisième opération consiste à caractériser la forme de chaque entourage 11, 21 pour calculer un paramètre de détourage permettant d'élaborer la consigne de détourage de chaque lentille ophtalmique 30.

Cette méthode de caractérisation est réalisée à partir des seules coordonnées planes $\rho_1$, $\theta_1$ des points palpés $P_1$ sur le cercle 11 de la monture de lunettes 10 ou sur la lentille de présentation 27.

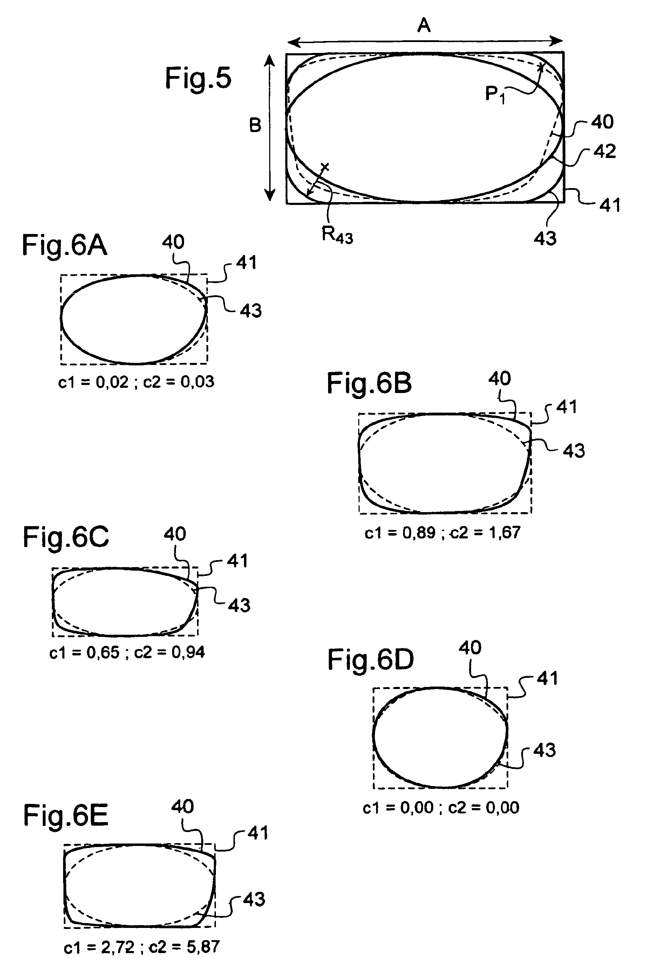

Dans cette méthode, on considère alors un profil projeté 40 (figure 5) qui est issu de la projection plane du profil longitudinal de l'entourage 11, 21 dans le plan ($X_1$; $Y_1$), et qui est donc défini par ces coordonnées planes $\rho_1$, $\theta_1$.

La méthode de caractérisation comporte globalement trois étapes successives consistant à :

i) construire au moins deux figures géométriques 41, 42, 43 prédéterminées autour du profil projeté 40,
ii) calculer des écarts entre le profil projeté 40 et chacune des figures géométriques 41, 42, 43 construites,
iii) parmi des figures géométriques cibles à chacune desquelles est associé un paramètre de détourage, sélectionner la figure géométrique cible la plus proche du profil projeté 40 en fonction des écarts calculés.

A l'étape i), l'unité informatique 250 construit trois figures géométriques prédéterminées autour du profil projeté 40, dont un rectangle 41, une ellipse 42 et un rectangle aux coins arrondis 43.

Le rectangle 41 est ainsi défini comme le rectangle circonscrit au profil projeté 40, dont deux côtés sont parallèles à l'axe horizontal $X_1$.

En coordonnées cartésiennes, les coins de ce rectangle 41 présentent alors les coordonnées suivantes : $(x_{1min}, y_{1min})$ ; $(x_{1min}, y_{1max})$ ; $(x_{1max}, y_{1max})$ ; $(x_{1max}, y_{1min})$. Il présente une longueur horizontale A et une hauteur verticale B.

L'ellipse 42 est ici définie comme l'ellipse inscrite dans le rectangle 41. Ses deux demi-longueurs sont alors égales à A/2 et B/2.

Le rectangle aux coins arrondis 43 est également défini comme le rectangle circonscrit au profil projeté 40, dont deux côtés sont parallèles à l'axe horizontal $X_1$. L'arrondi de ses coins présente un rayon de courbure $R_{43}$ qui est soit prédéterminé, par exemple égal à 5 mm, soit déterminé en fonction des dimensions du profil projeté 40. Ici, le rayon $R_{43}$ est défini selon la fonction suivante :

$$R_{43} = min (A/5, B/5).$$

Une fois ces trois figures géométriques 41, 42, 43 caractérisées, l'unité informatique 250 détermine en coordonnées polaires :

- la fonction représentative du profil projeté 40, notée $\rho_{40}(t)$,
- la fonction représentative du rectangle 41, notée $\rho_{41}(t)$,
- la fonction représentative de l'ellipse 42, notée $\rho_{42}(t)$, et
- la fonction représentative du rectangle aux coins arrondis 43, notée $\rho_{43}(t)$ .

En variante, on pourrait choisir de construire autour du profil projeté 40 d'autres figures géométriques, telles que par exemple un losange, un pentagone, etc. Les figures géométriques choisies pourraient par ailleurs être ajustées de manière différentes par rapport au profil projeté. Elles pourraient par exemple être inscrites à l'intérieur du profil projeté. Elles pourraient également être dimensionnées de telle manière que la surface délimitée entre chacune d'elle et le profil projeté soit minimal.

A l'étape ii), le calcul des écarts entre le profil projeté 40 et chacune des figures géométriques 41, 42, 43 est ici réalisé en approximant faire de la surface délimitée entre le profil projeté 40 et chacune des figures géométriques 41, 42, 43.

L'unité informatique 250 calcule à cet effet les descripteurs $FD_{n40}$ de la série de fourier associée au profil projeté 40 selon la formule suivante ; $FD_{n40} = \dfrac{u_n}{u_0}$ avec, pour n allant de 0 à N-1 $u_n = \dfrac{1}{N} \cdot \sum_{t=0}^{N-1} \rho_{40}(t) \cdot e^{-i2\pi \cdot nt}$

Elle calcule également, selon des formules mathématiques identiques, les descripteurs $FD_{n41}$, $FD_{n42}$, $FD_{n43}$ des séries de fourier associées aux rectangle 41, ellipse 42 et rectangle aux coins arrondis 43.

Ces descripteurs de fourier permettent ainsi de calculer une distance $d_{41}$ caractéristique de la surface délimitée entre le profil projeté 40 et le rectangle 41, suivant la formule :

$$d_{41} = \sqrt{\sum_{n=0}^{N-1} |FD_{n41} - FD_{n40}|}$$

Ils permettent également de calculer une distance $d_{42}$ caractéristique de la surface délimitée entre le profil projeté 40 et l'ellipse 42, suivant la formule :

$$d_{42} = \sqrt{\sum_{n=0}^{N-1} |FD_{n42} - FD_{n40}|}$$

Ils permettent aussi de calculer la distance $d_{43}$ caractéristique de la surface délimitée entre le profil projeté 40 et le rectangle 43, suivant la formule :

$$d_{43} = \sqrt{\sum_{n=0}^{N-1} |FD_{n43} - FD_{n40}|}$$

Ces distances $d_{41}$, $d_{42}$, $d_{43}$ pourraient également être approximées autrement, par exemple en déterminant la distance moyenne ou l'écart type séparant les 360 points du profil projeté 40 des 360 points correspondant de la figure géométrique 41, 42, 43 considérée.

A l'étape iii), ces trois distances $d_{41}$, $d_{42}$, $d_{43}$ sont utilisées pour déterminer la figure géométrique cible la plus proche du profil projeté 40.

La liste de figures géométriques cibles dans laquelle est sélectionnée la figure géométrique cible la plus proche du profil projeté 40 est ici plus grande que la liste initiale de figures géométriques construites autour du profil projeté 40. Cette liste comporte ainsi (outre un rectangle, une ellipse et un rectangle aux coins arrondis) un carré, un carré aux coins arrondis, un cercle et un rectangle elliptique.

Pour sélectionner, parmi ces figures géométriques cibles, celle qui est la plus proche du profil projeté 40, l'unité informatique calcule tes rapports des distances $d_{41}$, $d_{42}$, $d_{43}$ calculées à l'étape précédente, suivant les formules :

$$c_1 = \frac{d_{42}}{d_{41}}$$

$$c_2 = \frac{d_{42}}{d_{43}}$$

Elle calcule en outre le rapport de la longueur A sur la hauteur B du rectangle 41, suivant la formule :

$$c_3 = \frac{A}{B}$$

Elle détermine ensuite, à partir d'un tableau à trois entrées $c_1$, $c_2$, $c_3$, la figure géométrique cible la plus proche du profil projeté 40.

Plus particulièrement ici, l'unité informatique 250 caractérise le profil projeté 40 par un carré si :

- $c_1 > 1,05$,
- $c_2 > 1,05$, et
- $1,3 > c_3 > 0,7$.

L'unité informatique 250 caractérise le profil projeté 40 par un rectangle (figure 6E) si :

- $c_1 > 1,05$,
- $c_2 > 1,05$, et
- $c_3 < 0,7$ ou $c_3 > 1,3$.

L'unité informatique 250 caractérise le profil projeté 40 par un carré aux coins arrondis si :

- $0,5 < c_1 < 1,05$,
- $c_2 > 1,05$, et
- $1,3 > c_3 > 0,7$.

L'unité informatique 250 caractérise le profil projeté 40 par un rectangle aux coins arrondis (figure 6B) si :

- $0,5 < c_1 < 1,05$,
- $c_2 > 1,05$, et
- $c_3 < 0,7$ ou $c_3 > 1,3$.

L'unité informatique 250 caractérise le profil projeté 40 par un cercle (figure 6D) si :

- $c_1 < 0,5$,
- $c_2 < 0,5$, et

- $1,3 > c_3 > 0,7$.

L'unité informatique 250 caractérise le profil projeté 40 par une ellipse (figure 6A) si :

- $c_1 < 0,5$,
- $c_2 < 0,5$, et
- $c_3 < 0,7$ ou $c_3 > 1,3$.

Sinon, l'unité informatique 250 caractérise le profil projeté 40 par un rectangle elliptique (figure 6C).

A ce stade, on peut prévoir que l'unité informatique enregistre la figure géométrique cible associée à la monture de lunettes sélectionnée dans un registre de base de données ad hoc. Ainsi, par la suite, lorsqu'un autre porteur sélectionnera une monture de lunettes du même modèle, l'unité informatique pourra directement rechercher dans ce registre de base de données la figure géométrique cible associée à cette monture de lunettes.

La figure géométrique cible sélectionnée forme alors, comme cela sera décrit plus en détail dans la suite de cet exposé, un paramètre de détourage permettant d'élaborer la consigne de détourage de la lentille ophtalmique 30.

Quatrième opération

La quatrième opération consiste en un calcul de la longueur périmétrique $l_1$ de l'entourage 11, 21 de la monture de lunettes 10, 20 sélectionnée.

Pour élaborer la consigne de détourage, l'unité informatique 250 doit en effet déterminer cet autre paramètre de détourage, de manière que la lentille ophtalmique 30 une fois détourée puisse présenter un contour de longueur périmétrique égale à la longueur périmétrique de l'entourage 11, 21.

Le calcul de la longueur périmétrique $l_1$ de l'entourage 11, 21 diffère selon que la monture de lunettes 10, 20 sélectionnée est cerclée ou semi-cerclée.

Dans le cas où la monture de lunettes 10 est cerclée, le calcul est réalisé à partir des coordonnées spatiales $x_{1,i}$, $y_{1,i}$ $z_{1,i}$ des 360 points palpés $P_{1,i}$, selon la formule suivante :

$$l_1 = \sum_{i=0}^{359} \sqrt{(x_{1,i+1} - x_{1,i})^2 + (y_{1,i+1} - y_{1,i})^2 + (z_{1,i+1} - z_{1,i})^2}$$

Dans le cas où la monture de lunettes 20 est semi-cerclée, seules les coordonnées planes $x_1$, $y_1$ de 360 points palpés $P_1$ sont connues, ce qui ne permet pas de calculer la longueur périmétrique $l_1$ de l'entourage 21.

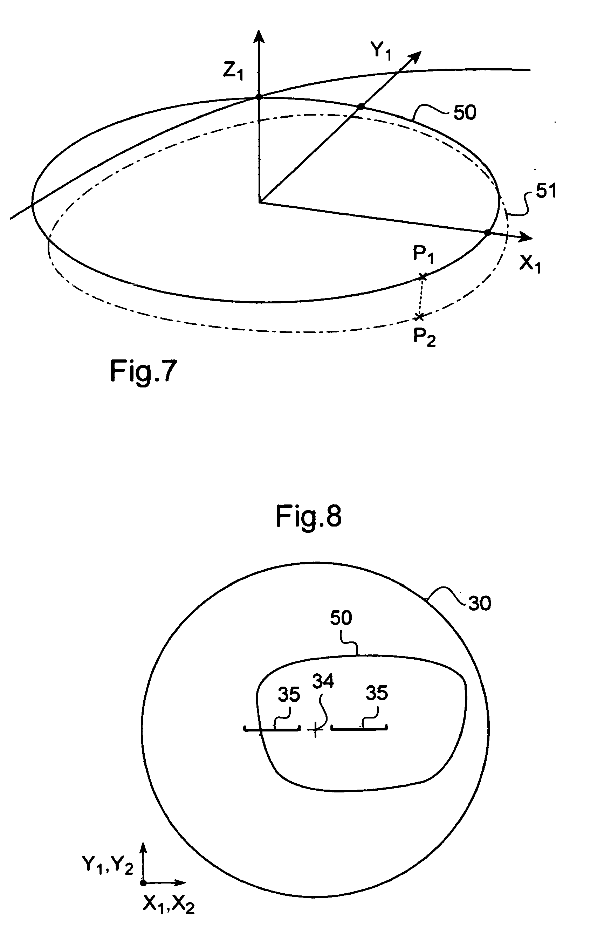

Le profil longitudinal ayant été acquis en deux dimensions dans le plan $(X_1 ; Y_1)$, il s'agit alors, comme le montre plus particulièrement la figure 7, de déformer ce profil longitudinal acquis 50 de manière à lui conférer une courbure (suivant l'axe $Z_1$) qui correspond à la courbure de l'entourage 21.

Pour cela, l'unité informatique détermine les coordonnées spatiales $x_2$, $y_2$, $z_2$ de 360 points $P_2$ d'un profil courbé 51, issus de la projection des 360 points $P_1$ sur une surface de référence prédéterminée.

Cette surface de référence prédéterminée est ici représentative de la forme de la face avant de la lentille de présentation 27. Elle est ici sphérique. Son rayon de courbure $Rc_1$ est égal à un rayon de courbure moyen, calculé à partir des rayons de courbure d'une variété représentative de lentilles de présentation (les rayons de courbure des lentilles de présentation sont effectivement généralement identiques ou homologues).

La projection est ici une projection orthogonale suivant l'axe normal $Z_1$. Par conséquent, les coordonnées planes $x_2$, $y_2$ des 360 points projetés $P_2$ du profil courbé 51 sont égales aux coordonnées planes $x_1$, $y_1$ des 360 points du profil longitudinal acquis 50.

Autrement formulé, la projection du profil longitudinal acquis 50 consiste, pour l'unité informatique 250, en un simple calcul des altitudes $z_2$ des points $P_2$ du profil courbé 51 en fonction du rayon de courbure $Rc_1$ et des coordonnées planes $x_1$, $y_1$ des points $P_1$, selon la formule suivante :

$$z_2 = Rc_1 - \sqrt{Rc_1^2 - \rho_1^2} \ , \ \text{avec } \rho_1 = (x_1^2 + y_1^2)^{1/2}$$

Les coordonnées spatiales $x_2$, $y_2$, $z_2$ des points $P_2$ du profil courbé 51 étant connues, l'unité informatique 250 calcule alors la longueur périmétrique $l_2$ du profil courbé 51, selon la formule suivante :

$$l_2 = \sum_{i=0}^{359} \sqrt{(x_{2,i+1} - x_{2,i})^2 + (y_{2,i+1} - y_{2,i})^2 + (z_{2,i+1} - z_{2,i})^2}$$

Cette longueur périmétrique $l_2$ du profil courbé 51 est considérée égale à la longueur périmétrique ll de l'entourage 21.

Cinquième opération

La cinquième opération consiste à centrer, orienter et projeter le profil longitudinal de l'entourage 11, 21 sur la lentille ophtalmique 30 de telle manière qu'une fois assemblée à la monture de lunettes, la lentille détourée suivant ce profil longitudinal projeté se trouve convenablement centrée en regard de la pupille de l'oeil correspondant du porteur.

A l'étape de centrage, comme le montre la figure 8, il s'agit de mettre le référentiel de porté de la monture de lunettes 10, 20 en coïncidence avec le référentiel optique de la lentille ophtalmique 30.

Cette mise en coïncidence est réalisée en alignant les axes horizontaux $X_1$, $X_2$, les axes d'ordonnée $Y_1$, $Y_2$, et les axes normaux $Z_1$, $Z_2$ des repères associés à ces deux référentiels, puis en centrant le point pupillaire (et donc le profil longitudinal) repéré dans le repère $X_1$, $Y_1$, $Z_1$ de la monture sur le point de centrage 34 repéré dans le repère $X_2$, $Y_2$, $Z_2$ de la lentille.

A l'étape d'orientation, il s'agit d'orienter le profil longitudinal de l'entourage 11, 21 autour du point de centrage 34 suivant un angle déterminé par rapport aux traits d'horizon 35 de lentille ophtalmique 30. Cet angle est déterminé par l'optométriste, et est donc compris dans les prescriptions du porteur. Il permet de s'assurer qu'une fois la lentille montée dans l'entourage, la répartition de ses puissances optiques convienne à l'oeil correspondant du porteur.

A l'étape de projection, il s'agit de rectifier le profil longitudinal de l'entourage 11, 21, qui ne présente pas une courbure identique à celle de la lentille ophtalmique 30, afin de lui conférer une telle courbure.

Cette étape est plus précisément réalisée en projetant le profil longitudinal de l'entourage 11, 21 sur la face avant 31 de la lentille ophtalmique 30, de manière à pouvoir déduire le contour suivant lequel la lentille ophtalmique 30 devra être détourée.

Bien sûr, en variante, cette projection pourrait être réalisée sur une autre surface caractéristique de la lentille ophtalmique 30. Elle pourrait par exemple être réalisée sur la face arrière 32 de la lentilles ophtalmique 30. Elle pourrait aussi être réalisée sur une surface intermédiaire présentant une courbure identique à celle de l'une des faces avant 31 et arrière 32 de la lentille ophtalmique, c'est-à-dire sur une surface qui est située entre les faces avant 31 et arrière 32 de la lentille ophtalmique 30 et qui est parallèle à la surface de l'une de ces faces avant 31 et arrière 32.

Ici, comme le montre la figure 9, la projection est une projection orthogonale suivant l'axe normal $Z_2$. Par conséquent, les coordonnées planes $x_3$, $y_3$ des 360 points $P_3$ du profil longitudinal projeté 52 (le « second profil longitudinal ») sont égales aux coordonnées planes $x_1$, $y_1$ des 360 points du profil longitudinal acquis 50.

Autrement formulé, la projection du profil longitudinal acquis 50 consiste, pour l'unité informatique 250, en un simple calcul des altitudes $z_3$ des points $P_3$ du profil longitudinal projeté 52.

La face avant de la lentille ophtalmique 30 étant ici sphérique et présentant un rayon de courbure $Rc_3$ connu, le calcul des altitudes $z_3$ des points $P_3$ du profil longitudinal projeté 52 est réalisé selon la formule suivante :

$$z_3 = \sqrt{Rc_3^2 - \rho_1^2} - Rc_3 \quad, \text{ avec } \rho_1 = (x_1{}^2 + y_1{}^2)^{1/2}$$

Sixième opération

Les coordonnées spatiales $x_3$, $y_3$, $z_3$ des points $P_3$ du profil longitudinal projeté 52 étant connues, l'unité informatique 250 corrige au cours de la sixième opération la forme du profil longitudinal projeté 52, de manière que le profil longitudinal corrigé 53 présente une longueur périmétrique $l_4$ égale à la longueur périmétrique $l_1$ du profil longitudinal acquis 50.

Cette correction est réalisée en deux étapes, ici successives, consistant à:

i) étirer, selon une fonction mathématique $f$ donnée, le profil longitudinal projeté 52 suivant l'axe d'ordonnée $Y_2$ (figure 10), puis à

ii) comprimer le profil longitudinal étiré 52' suivant l'axe horizontal $X_2$ jusqu'à égaliser les longueurs périmétriques $l_1$, $l_4$ du profil longitudinal corrigé 53 et du profil longitudinal acquis 50.

A l'étape i), l'étirement du profil longitudinal projeté 52 suivant l'axe d'ordonnée $Y_2$ permet de s'assurer que la tranche de la lentille ophtalmique 30 montée dans son entourage 11, 21 appuie correctement sur les parties basse et haute de l'entourage 11, 21.

La fonction mathématique *f* d'étirement de ce profil longitudinal projeté 52 est indépendante des différences entre les longueurs périmétriques des différents profils longitudinaux.

Cette fonction mathématique *f* est une affinité vectorielle autour de l'axe horizontal $X_2$ (également connue sous le terme de « dilatation ») appliquée aux coordonnées planes $x_3$, $y_3$ des points $P_3$ du profil longitudinal projeté 52. Cette affinité vectorielle présente un rapport k, appelé coefficient d'étirement.

Cette fonction peut ainsi s'exprimer sous la forme :

$$f(y_3) = y_3' = k \cdot y_3,$$

avec k préférentiellement compris entre 1 et 1,05 (voir figure 10).

Ce coefficient d'étirement k peut être déterminé de différentes manières.

Dans un premier mode de réalisation, on peut prévoir que le coefficient d'étirement k soit constant pour l'ensemble des points $P_3$ traités, mais qu'il soit déterminé en fonction au moins de la figure géométrique cible sélectionnée au cours de la troisième opération.

A titre d'exemple, on peut prévoir :

- d'assigner la valeur 1 au coefficient d'étirement k si la figure géométrique cible sélectionnée est un carré, un carré aux coins arrondis, un cercle ou une ellipse,
- d'assigner la valeur 1,01 au coefficient d'étirement k si la figure géométrique cible sélectionnée est un rectangle,
- d'assigner la valeur 1,02 au coefficient d'étirement k si la figure géométrique cible sélectionnée est un rectangle aux coins arrondis,
- d'assigner la valeur 1,03 au coefficient d'étirement k si la figure, géométrique cible sélectionnée est un rectangle elliptique.

On peut par ailleurs éventuellement prévoir d'incrémenter ou de décrémenter ce coefficient d'étirement k de plus ou moins 0,005, selon que la largeur du profil longitudinal rectifié 52 (suivant l'axe horizontal $X_2$) est importante ou non.

On pourrait également prévoir de modifier ce coefficient d'étirement k en fonction d'autres paramètres, tels que la cambrure de l'entourage 11, 21, la cambrure de la lentille ophtalmiques 30 et le matériau de la monture de lunettes 10, 20 sélectionnée.

On pourrait ainsi prévoir d'étirer le profil longitudinal rectifié de manière accrue si la cambrure de la lentille ophtalmique 30 est supérieure à celle de l'entourage 11, 21 ou si la monture de lunettes est réalisée dans un matériau élastiquement déformable.

Dans un second mode de réalisation préférentiel, on peut prévoir que le coefficient d'étirement k soit une variable qui s'exprime sous la forme d'une fonction $j(x_3)$, et qui depende donc de l'abscisse $x_3$ du point $P_3$ considéré.

Le coefficient d'étirement k est alors déterminé pour varier continument suivant une distribution dite en demi-cercle, afin d'être égal à 1 au niveau des points $P_3$ du profil longitudinal projeté 52 dont les abscisses $x_{3max}$, $x_{3min}$ sont maximales et minimales, et d'être égal à un seuil maximum Smax supérieur à 1 au niveau des points $P_3$ dont les abscisses $x_3$ sont égales à la moyenne des abscisses maximales et minimales.

Le coefficient d'étirement k pourra par exemple s'exprimer sous la forme suivante :

$$k = j(x_3) = 1 + 4 \cdot Smax \cdot \frac{(x_3 - x_{3min}) \cdot (x_{3max} - x_3)}{(x_{3max} - x_{3min})^2}$$

Ce seuil maximum Smax est alors déterminé en fonction au moins de la figure géométrique cible sélectionnée au cours de la troisième opération.

Quoi qu'il en soit, à l'issue de cette étape i), l'unité informatique 250 obtient les coordonnées spatiales $x_3$, $y_3'$, $z_3$ des points $P_3$ du profil longitudinal étiré 52'.

A l'étape ii), elle modifie les abscisses $x_3$ de ces points $P_3'$, de manière à obtenir un profil longitudinal corrigé 53 de longueur périmétrique $l_4$ égale à la longueur périmétrique $l_1$ du profil longitudinal acquis 50.

Au cours de cette étape, les abscisses $x_3$ des points $P_3$ sont modifiées par itération suivant la formule suivant :

$$x_{3,j+1} = x_{3,j} \cdot \left(1 + \frac{l_1 - l_{3,j}}{l_1}\right)$$ , avec $l_{3,j}$ la longueur périmétrique du profil longitudinal caractérisé par les points

de coordonnées $x_{3,j}$ $y_3$', $z_3$.

Lorsque cette longueur périmétriques $l_{3,j}$ devient égale, à 0,1% près, à la longueur périmétrique $l_1$ du profil longitudinal acquis 50, l'unité informatique stoppe cette itération et mémorise les coordonnées spatiales $x_4$, $y_4$, $z_4$ des points $P_4$ du profil longitudinal corrigé 53.

Septième opération

La septième opération consiste à déterminer une consigne d'ébauche et de finition du détourage de la lentille ophtalmique 30, de manière à la détourer suivant ce profil longitudinal corrigé 53.

Cette septième opération varie en fonction de l'architecture du dispositif de détourage utilisé. Elle ne sera donc pas exposée ici en détail.

Elle consiste également à déterminer une consigne de surfinition du détourage de la lentille ophtalmique. Cette consigne de surfinition pourra avantageusement être élaborée de manière à polir la lentille suivant un processus fonction de la figure géométrique cible sélectionnée au cours de la troisième opération.

Plus particulièrement, on pourra prévoir de polir plus intensément la lentille ophtalmique, c'est-à-dire sur une durée plus longue et/ou avec un effort de polissage accru, si la figure géométrique cible sélectionnée révèle de probables difficultés de montage de la lentille ophtalmique 30 dans son entourage 11, 21.

Ainsi, on pourra prévoir de polir la lentille ophtalmique 30 durant une durée normale si la figure cible sélectionnée est un cercle, une ellipse ou un rectangle elliptique. On pourra en revanche prévoir de la polir durant une durée plus importante si la figure cible sélectionnée est un carré, un carré aux coins arrondis, un rectangle ou un rectangle aux coins arrondis.

Préalablement à la sixième opération, on pourra par ailleurs prévoir d'élaborer la fonction mathématique *f* d'étirement du profil longitudinal projeté 52, en fonction des erreurs de dispersion naturellement générées par le dispositif de détourage de la lentille ophtalmique.

Ces erreurs de dispersion sont bien sûr liées à l'architecture du dispositif de détourage. Elles présentent toutefois des effets plus ou moins sensibles sur le détourage des lentilles, selon que la lentille est détourée suivant une forme plutôt rectangulaire ou plutôt elliptique.

Ainsi, les lentilles ophtalmiques détourées selon un profil longitudinal globalement rectangulaire sont plus sensibles aux erreurs de dispersion que les lentilles ophtalmiques détourées selon un profil longitudinal globalement elliptique.

Pour tenir compte de ce phénomène, on élabore différentes fonctions mathématiques *f* chacune associée à une figure géométrique cible. On s'aide pour cela d'un registre de base de données dont chaque enregistrement est associé à une figure géométrique cible et mémorise un paramètre de dispersion moyen.

Pour cela, des opérations de mesure sont menées sur une variété de lentilles ophtalmiques détourées selon des profils longitudinaux de formes différentes. La forme de chaque profil longitudinal mesuré est ensuite comparée à la consigne de détourage de la lentille considérée, ce qui permet de calculer, pour chaque lentille ophtalmique mesurée, un écart appelé paramètre de dispersion.

Puis, on lit dans le registre de base de donnée le paramètre de dispersion moyen associé à la figure géométrique cible sélectionnée et on modifie ce dernier en fonction du nouveau paramètre de dispersion calculé, de manière à affiner la valeur du paramètre de dispersion moyen.

On obtient ainsi un paramètre de dispersion moyen pour chaque type de figure géométrique cible. Ce paramètre permet ainsi de prévoir l'effet que chaque type de figure géométrique cible a sur les erreurs de dispersion.

Ainsi, lors du calcul d'une nouvelle consigne de détourage d'une autre lentille ophtalmique, la fonction mathématique *f* d'étirement du profil longitudinal projeté 52 pourra être déterminée en lisant dans le registre la valeur du paramètre de dispersion moyen associé à la figure géométrique cible sélectionnée.

Généralement, au-delà d'un certain nombre de lentilles mesurées, le paramètre de dispersion moyen variera peu puisque les erreurs de dispersion resteront généralement restreintes dans un intervalle de valeurs identifié.

Pour un dispositif d'usinage classique, le paramètre de dispersion sera alors généralement :

- réduit si la figure géométrique cible sélectionnée est un carré, un carré aux coins arrondis, un cercle ou une ellipse,
- intermédiaire si la figure géométrique cible sélectionnée est un rectangle ou un rectangle aux coins arrondis,
- maximum si la figure géométrique cible sélectionnée est un rectangle elliptique.

Par conséquent, la fonction mathématique *f* pourra par exemple présenter un coefficient d'étirement k (ou au seuil maximum Smax) sensiblement égal à :

- 1 si la figure géométrique cible sélectionnée est un carré, un carré aux coins arrondis, un cercle ou une ellipse,
- 1, 015 si la figure géométrique cible sélectionnée est un rectangle ou un rectangle aux coins arrondis,
- 1,03 si la figure géométrique cible sélectionnée est un rectangle elliptique.

La présente invention n'est nullement limitée aux modes de réalisation décrits et représentés.

En particulier, les troisième, quatrième et sixième opérations pourront être réalisées, non par par l'unité informatique 250 du terminal fabricant, mais par toute autre unité informatique programmée à cet effet, par exemple par l'unité informatique du terminal-client.

**Revendications**

1. Méthode d'élaboration d'une consigne de détourage d'une lentille ophtalmique (30) en vue de son montage dans un entourage (11, 21) d'une monture de lunettes (10, 20), comportant une étape consistant à :

   a) acquérir la forme d'un premier profil longitudinal (50) dudit entourage,
   et **caractérisée en ce qu'**elle comprend en outre les étapes consistant à :
   b) construire, sur une projection plane (40) dudit premier profil longitudinal (50), au moins deux figures géométriques prédéterminées (41 - 43), en ajustant leurs dimensions à celles de ladite projection plane (40),
   c) calculer des écarts ($d_{41}$ - $d_{43}$) entre la projection plane (40) dudit premier profil longitudinal (50) et chacune desdites figures géométriques prédéterminées (41 - 43),
   d) parmi des figures géométriques cibles à chacune desquelles est associé un paramètre de détourage, sélectionner la figure géométrique cible la plus proche du premier profil longitudinal (50) en fonction desdits écarts ($d_{41}$ - $d_{43}$),
   e) calculer ladite consigne de détourage en fonction de la forme du premier profil longitudinal (50) et du paramètre de détourage associé à la figure géométrique cible sélectionnée.

2. Méthode selon la revendication 1, dans laquelle, à l'étape e) :

   - on détermine la forme spatiale d'un second profil longitudinal (52), issu de la projection dudit premier profil longitudinal (51) sur une surface caractéristique de ladite lentille ophtalmique (30),
   - on déforme le second profil longitudinal (52) suivant deux directions différentes, avec des coefficients de déformation (k) appliqués à chaque direction dont l'un au moins est fonction du paramètre de détourage associé à la la figure géométrique cible sélectionnée, de manière à égaliser la longueur périmétrique ($l_3$) dudit second profil longitudinal (52) avec la longueur périmétrique ($l_1$) dudit premier profil longitudinal (50), et
   - on déduit du second profil longitudinal déformé une consigne d'ébauche de détourage de la lentille ophtalmique (30).

3. Méthode selon la revendication 2, dans laquelle ladite surface caractéristique est la face avant (31) ou arrière (32) de la lentille ophtalmique (30).

4. Méthode selon la revendication 2, dans laquelle ladite surface caractéristique est une surface située entre les faces avant (31) et arrière (32) de la lentille ophtalmique (30) et parallèle à l'une de ces faces avant (31) et arrière (32).

5. Méthode selon l'une des revendications 1 à 4, dans laquelle, à l'étape e), on détermine une consigne de surfinition du détourage de la lentille ophtalmique (30) en fonction du paramètre de détourage associé à la figure géométrique cible sélectionnée.

6. Méthode selon l'une des revendications 1 à 5, dans laquelle, à l'étape b), on construit au moins trois figures géométriques prédéterminées (41 - 43).

7. Méthode selon l'une des revendications 1 à 6, dans laquelle, à l'étape b), lesdites figures géométriques prédéterminées comportent une ellipse (42) et/ou un rectangle (41) et/ou un rectangle aux coins arrondis (43).

8. Méthode selon l'une des revendications 1 à 7, dans laquelle, à l'étape d), lesdites figures géométriques cibles comportent au moins lesdites figures géométriques prédéterminées (41 - 43).

**9.** Méthode selon l'une des revendications 1 à 8, dans laquelle, à l'étape b), les dimensions desdites figures géométriques prédéterminées (41 - 43) sont ajustées de telle manière que l'une au moins desdites figures géométriques (41) soit circonscrite ou inscrite à la projection plane (40) du premier profil longitudinal (50).

**10.** Méthode selon l'une des revendications 1 à 8, dans laquelle, à l'étape b), les dimensions desdites figures géométriques prédéterminées (41 - 43) sont ajustées de telle manière que l'écart ($d_{41}$) entre la projection plane (40) du premier profil longitudinal (50) et l'une au moins desdites figures géométriques (41) soit minimal.

**11.** Méthode selon l'une des revendications 1 à 10, dans laquelle, à l'étape c), lesdits écarts ($d_{41}$ - $d_{43}$) sont calculés en déterminant l'aire de la surface délimitée entre la projection plane (40) du premier profil longitudinal (50) et chacune desdites figures géométriques (41 - 43).

**12.** Méthode selon la revendication 11, dans laquelle la détermination de l'écart ($d_{41}$ - $d_{43}$) entre la projection plane (40) du premier profil longitudinal (50) et chaque figure géométrique (41 - 43) comporte les opérations consistant à :

- calculer en coordonnée polaires des fonctions représentatives ($\rho_{40}(t)$, $\rho_{41}(t)$, $\rho_{42}(t)$, $\rho_{43}(t)$) de ladite projection plane (40) et de chaque figure géométrique (41 - 43),
- calculer les séries de fourrier associées à ces fonctions représentatives,
- calculer les descripteurs ($FD_{n40}$, $FD_{n41}$, $FD_{n42}$, $FD_{n43}$) desdites séries de fourrier,
- déduire lesdits écarts ($d_{41}$ - $d_{43}$) desdits descripteurs ($FD_{n40}$, $FD_{n41}$, $FD_{n42}$, $FD_{n43}$).

**13.** Méthode selon l'une des revendications 1 à 12, dans laquelle, à l'étape d) :

- on calcule au moins un rapport ($c_1$, $c_2$) entre lesdits écarts ($d_{41}$ - $d_{43}$), et
- on détermine, parmi des intervalles prédéterminés chacun associés à une figure géométrique cible, l'intervalle dans lequel se trouve chaque rapport ($c_1$, $c_2$).

**14.** Méthode selon l'une des revendications 1 à 13, dans laquelle, à l'étape d), on calcule le rapport ($c_3$) de la longueur (A) sur la largeur (B) d'un rectangle (41) circonscrit au premier profil longitudinal (50), et on sélectionne ladite figure géométrique cible en fonction également dudit rapport ($c_3$).

**15.** Méthode selon l'une des revendications 1 à 14, dans laquelle ledit entourage comporte un cercle (11) ou une arcade (21A) équipée d'un fil (21 B).

**16.** Procédé de paramétrage d'un dispositif de préparation d'une lentille ophtalmique (30) en vue de son montage dans un entourage (11, 21) d'une monture de lunettes (10, 20), comportant les opérations consistant à :

- élaborer une consigne de détourage d'une première lentille ophtalmique selon la méthode de la revendication 2,
- détourer ladite première lentille ophtalmique suivant la consigne de détourage élaborée,
- mesurer sur la lentille ophtalmique détourée un profil longitudinal courant le long de sa tranche,
- calculer un écart entre la forme du profil longitudinal mesuré et la forme du second profil longitudinal déformé,
- chercher, dans un registre de base de données dont chaque enregistrement est associé à une figure géométrique cible et mémorise un écart moyen, l'enregistrement qui est associé à la figure géométrique cible sélectionnée à l'étape d),
- lire l'écart moyen mémorisé dans ledit enregistrement et le modifier en fonction de l'écart calculé.

**17.** Procédé selon la revendication précédente, dans lequel, pour élaborer la consigne de détourage d'une autre lentille ophtalmique selon la méthode de la revendication 2, à l'étape e), on cherche dans le registre de base de données l'enregistrement qui est associé à la figure géométrique cible sélectionnée à l'étape d), on lit l'écart moyen mémorisé dans cet enregistrement, et on calcule le coefficient de déformation (k) du second profil longitudinal (52) en fonction de cet écart moyen lu.

**Claims**

**1.** A method for generating a trimming setpoint for trimming an ophthalmic lens (30) in order to mount it in a surround (11, 21) of a spectacle frame (10, 20), comprising a step consisting in :

a) acquiring the shape of a first longitudinal profile (50) of said surround,
the method being **characterized in that** it comprises the steps consisting in :
b) constructing, on a two-dimensional projection (40) of said first longitudinal profile (50), at least two predetermined geometrical figures (41-43), by adjusting their dimensions to those of said two-dimensional projection (40),
c) calculating differences ($d_{41}$-$d_{43}$) between the two-dimensional projection (40) of said first longitudinal profile (50) and each of said predetermined geometrical figures (41-43),
d) among target geometrical figures associated to trimming parameters, selecting the target geometrical figure that is closest to the first longitudinal profile (50) according to said differences ($d_{41}$-$d_{43}$),
e) calculating said trimming setpoint according to the shape of the first longitudinal profile (50) and the trimming parameter associated with the selected target geometrical figure.

2. The method as claimed in claim 1, wherein, in the step e):

- the spatial shape of a second longitudinal profile (52), obtained from the projection of said first longitudinal profile (51) onto a characteristic surface of said ophthalmic lens (30), is determined,
- the second longitudinal profile (52) is distorted in two different directions, with distortion coefficients (k) applied to each direction, at least one of which is a function of the trimming parameter associated with the selected target geometrical figure, so as to equalize the perimeter length ($l_3$) of said second longitudinal profile (52) and the perimeter length ($l_1$) of said first longitudinal profile (50), and
- a trimming preform setpoint for the ophthalmic lens (30) is deduced from the distorted second longitudinal profile.

3. The method as claimed in claim 2, wherein said characteristic surface is the front (31) or rear (32) face of the ophthalmic lens (30).

4. The method as claimed in claim 2, wherein said characteristic surface is a surface situated between the front (31) and rear (32) faces of the ophthalmic lens (30) and parallel to one of these front (31) and rear (32) faces.

5. The method as claimed in one of claims 1 to 4, wherein, in the step e), a superfinishing setpoint for trimming the ophthalmic lens (30) is determined according to the trimming parameter associated with the selected target geometric figure.

6. The method as claimed in one of claims 1 to 5, wherein, in the step b), at least three predetermined geometrical figures (41-43) are constructed.

7. The method as claimed in one of claims 1 to 6, wherein, in the step b), said predetermined geometrical figures comprise an ellipse (42) and/or a rectangle (41) and/or a rectangle with rounded corners (43).

8. The method as claimed in one of claims 1 to 7, wherein, in the step d), said target geometrical figures comprise at least said predetermined geometrical figures (41-43).

9. The method as claimed in one of claims 1 to 8, wherein, in the step b), the dimensions of said predetermined geometrical figures (41-43) are adjusted so that at least one of said geometrical figures (41) is circumscribed or inscribed on the two-dimensional projection (40) of the first longitudinal profile (50).

10. The method as claimed in one of claims 1 to 8, wherein, in the step b), the dimensions of said predetermined geometrical figures (41-43) are adjusted so that the difference ($d_{41}$) between the two-dimensional projection (40) of the first longitudinal profile (50) and at least one of said geometrical figures (41) is minimal.

11. The method as claimed in one of claims 1 to 10, wherein, in the step c), said differences ($d_{41}$-$d_{43}$) are calculated by determining the area of the surface delimited between the two-dimensional projection (40) of the first longitudinal profile (50) and each of said geometrical figures (41-43).

12. The method as claimed in claim 11, wherein the determination of the difference ($d_{41}$-$d_{43}$) between the two-dimensional projection (40) of the first longitudinal profile (50) and each geometrical figure (41-43) comprises operations involving:

- calculating, in polar coordinates, the representative functions ($\rho_{40}(t)$, $\rho_{41}(t)$, $\rho_{42}(t)$, $\rho_{43}(t)$) of said two-dimensional projection (40) and of each geometrical figure (41-43),
- calculating the fourier series associated with these representative functions,

- calculating the descriptors ($FD_{n40}$, $FD_{n41}$, $FD_{n42}$, $FD_{n43}$) of said fourier series,
- deducing said differences ($d_{41}$-$d_{43}$) from said descriptors ($FD_{n40}$, $FD_{n41}$, $FD_{n42}$, $FD_{n43}$).

13. The method as claimed in one of claims 1 to 12, wherein, in step d):

- at least one ratio ($c_1$, $c_2$) is calculated between said differences ($d_{41}$-$d_{43}$), and
- among predetermined intervals each associated with a target geometrical figure, the interval within which each ratio ($c_1$, $c_2$) is located is determined.

14. The method as claimed in one of claims 1 to 13, wherein, in step d), the ratio ($c_3$) of the length (A) to the width (B) of a rectangle (41) circumscribed on the first longitudinal profile (50) is calculated, and said target geometrical figure is selected, also according to said ratio ($c_3$).

15. The method as claimed in one of claims 1 to 14, wherein said surround comprises a rim (11) or an arch (21A) fitted with a thread (21B).

16. A method for configuring a device for preparing an ophthalmic lens (30) for it to be mounted in a surround (11, 21) of a spectacle frame (10, 20), comprising operations involving:

- generating a trimming setpoint for a first ophthalmic lens according to the method of claim 2,
- trimming said first ophthalmic lens according to the generated trimming setpoint,
- measuring, on the trimmed ophthalmic lens, a longitudinal profile running along its edge,
- calculating a difference between the form of the measured longitudinal profile and the form of the distorted second longitudinal profile,
- searching, in a database register, each record of which has an associated target geometrical figure and stores a mean difference, for the record that is associated with the target geometrical figure selected in step d),
- reading the mean difference stored in said record and modifying it according to the calculated difference.

17. The method as claimed in the preceding claim, wherein, in order to generate the trimming setpoint for another ophthalmic lens according to the method of claim 2, in step e), the database register is searched for the record that is associated with the target geometrical figure selected in step d), the mean difference stored in this record is read, and the distortion coefficient (k) of the second longitudinal profile (52) is calculated according to this read mean difference.

**Patentansprüche**

1. Methode zum Ausarbeiten einer Vorgabe für das Zuschneiden eines Brillenglases (30) in Hinblick auf seine Montage in eine Einfassung (11, 21) eines Brillengestells (10,20), die den folgenden Schritt umfasst:

a) Erfassen der Form eines ersten Längsprofils (50) der Einfassung (11, 21),
**dadurch gekennzeichnet ist, dass** er zudem folgende Schritte umfasst:
b) Entwerfen auf einer ebenen Projektion (40) des ersten Längsprofils (50) von mindestens zwei vorbestimmten geometrischen Figurgen (41-43) und Justieren ihrer Abmessungen an denen der ebenen Projektion (40),
c) Berechnen der Abweichungen ($d_{41}$ - $d_{43}$) zwischen der ebenen Projektion (40) des ersten Längsprofils (50) und jeder dieser vorbestimmten geometrischen Figuren (41-43),
d) Auswählen unter den geometrischen Zielfiguren, denen jeweils ein Zuschneideparameter zugeordnet ist, der abhängig von den Abweichungen ($d_{41}$-$d_{43}$) dem ersten Längsprofil (50) am nächsten kommenden geometrischen Zielfigur,
e) Berechnen der Vorgabe für das Zuschneiden in Abhängigkeit der Form des ersten Längsprofils (50) und des der ausgewählten geometrischen Zielfigur zugeordneten Zuschneideparameters.

2. Methode nach Anspruch 1, bei der man beim Schritt e):

- ausgehend von der Projektion des ersten Längsprofils (51) auf einer charakteristischen Oberfläche des Brillenglases (30) die räumliche Form eines zweiten Längsprofils (52) bestimmt,
- das zweite Längsprofil (52) entlang zwei unterschiedlichen Richtungen mit für jede Richtung angewendeten Verformungsfaktoren (k) verformt, wobei mindestens einer der Faktoren vom der ausgewählten geometrischen Zielfigur zugeordneten Zuschneideparameter abhängt, sodass die Umfangslänge ($l_3$) des zweiten Längsprofils (52) mit der Umfangslänge ($l_1$) des ersten Längsprofils (50) abgeglichen wird, und
- vom zweiten verformten Längsprofil eine Vorgabe für einen Zuschneideentwurf des Brillenglases (30) ableitet.

3. Methode nach Anspruch 2, bei der die charakteristische Oberfläche die Vorderseite (31) oder die Rückseite (32) des Brillenglases (30) ist.

4. Methode nach Anspruch 2, bei der die charakteristische Oberfläche eine Oberfläche ist, die sich zwischen der Vorderseite (31) und Rückseite (32) des Brillenglases (30) befindet und zu einer dieser Seiten (31, 32) parallel ist.

5. Methode nach einem der Ansprüche 1 bis 4, bei der man im Schritt e) in Abhängigkeit des der gewählten geometrischen Zielfigur zugeordneten Zuschneideparameters eine Vorgabe für das endgültige Zuschneiden des Brillenglases (30) bestimmt.

6. Methode nach einem der Ansprüche 1 bis 5, bei der man im Schritt b) mindestens drei vorbestimmte geometrische Figuren (41-43) entwirft.

7. Methode nach einem der Ansprüche 1 bis 6, bei der im Schritt b) die vorbestimmten geometrischen Figuren eine Ellipse (42) und/oder ein Rechteck (41) und/oder ein Rechteck mit abgerundeten Ecken (43) umfassen.

8. Methode nach einem der Ansprüche 1 bis 7, bei der im Schritt d) die geometrischen Zielfiguren mindestens die vorbestimmten geometrischen Figuren (41-43) umfassen.

9. Methode nach einem der Ansprüche 1 bis 8, bei der im Schritt b) die Abmessungen der vorbestimmten geometrischen Figuren (41 - 43) derart justiert sind, dass mindestens eine der geometrischen Figuren (41) in der ebenen Projektion (40) des ersten Längsprofils (50) aufgenommen oder abgegrenzt ist.

10. Methode nach einem der Ansprüche 1 bis 8, bei der im Schritt b) die Abmessungen der vorbestimmten geometrischen Figuren (41 - 43) derart justiert sind, dass die Abweichung ($d_{41}$) zwischen der ebenen Projektion (40) des ersten Längsprofils (50) und mindestens einer der geometrischen Figuren (41) minimal ist.

11. Methode nach einem der Ansprüche 1 bis 10, bei der im Schritt c) die Abweichungen ($d_{41}$ - $d_{43}$) berechnet werden, indem man den Flächeninhalt, der zwischen der ebenen Projektion (40) des ersten Längsprofils (50) und jeder dieser geometrischen Figuren (41 - 43) abgegrenzt ist, bestimmt.

12. Methode nach Anspruch 11, bei der das Bestimmen der Abweichung ($d_{41}$ - $d_{43}$) zwischen der ebenen Projektion (40) des ersten Längsprofils (50) und jeder geometrischen Figur (41 - 43) folgende Vorgänge umfasst:

- Berechnen in Polarkoordinaten der der ebenen Projektion (40) und jeder geometrischen Figur (41- 43) entsprechenden Funktionen ($\rho_{40}(t)$, $\rho_{41}(t)$, $\rho_{42}(t)$, $\rho_{43}(t)$),
- Berechnen der diesen repräsentativen Funktionen zugeordneten Fourrierreihen,
- Berechnen der Deskriptoren ($FD_{n40}$, $FD_{n41}$, $FD_{n42}$, $FD_{n43}$) dieser Fourrierreihen,
- Ableiten der Abweichungen ($d_{41}$-$d_{43}$) dieser Deskriptoren ($FD_{n40}$, $FD_{n41}$, $FD_{n42}$, $FD_{n43}$).

13. Methode nach einem der Ansprüche 1 bis 12, bei der man im Schritt d):

- mindestens ein Verhältnis ($c_1$, $c_2$) zwischen den Abweichungen ($d_{41}$ - $d_{43}$) berechnet, und
- unter den einer geometrischen Zielfigur zugeordneten vorbestimmten Intervallen das Intervall bestimmt, in dem sich jedes Verhältnis ($c_1$, $c_2$) befindet.

14. Methode nach einem der Ansprüche 1 bis 13, bei der man im Schritt d) das Verhältnis ($c_3$) von Länge (A) und Breite (B) eines im ersten Längsprofil (50) abgegrenzten Rechtecks (41) berechnet, und die geometrische Zielfigur ebenfalls in Abhängigkeit dieses Verhältnisses ($c_3$) auswählt.

15. Methode nach einem der Ansprüche 1 bis 14, bei der die Einfassung einen Einfassung (11) oder einen Bogen (21A) mit einem Draht (21B) umfasst.

16. Parametrierverfahren einer Präparationsvorrichtung für ein Brillenglas (30) in Hinblick auf seine Montage in eine Einfassung (11, 21) eines Brillengestells (10, 20), das folgende Vorgänge umfasst:

- Ausarbeiten einer Vorgabe zum Zuschneiden eines ersten Brillenglases nach der Methode von Anspruch 2,
- Zuschneiden des ersten Brillenglases gemäß der ausgearbeiteten Vorgabe für das Zuschneiden,
- Messen eines Längsprofils auf dem zugeschnittenen Brillenglas entlang seines Randes,
- Berechnen einer Abweichung zwischen der Form des gemessenen Längsprofils und der Form des verformten zweiten Längsprofils,
- Suchen einer Speicherung in einem Datenbankregister, dessen Speicherung einer geometrischen Zielfigur zugeordnet ist und eine durchschnittliche Abweichung speichert, die der in Schritt d) ausgewählten geometrischen Zielfigur zugeordnet ist,
- Ablesen der in der Speicherung gespeicherten durchschnittlichen Abweichung und Ändern dieser Abweichung entsprechend der berechneten Abweichung.

17. Verfahren nach vorausgehendem Anspruch, bei dem man zum Ausarbeiten der Vorgabe für das Zuschneiden eines anderen Brillenglases nach der Methode aus Anspruch 2 im Schritt e) im Datenbankregister die Speicherung sucht, die der im Schritt d) ausgewählten geometrischen Zielfigur zugeordnet ist und man die in dieser Speicherung gespeicherte durchschnittliche Abweichung abliest und man den Verformungsfaktoren (k) des zweiten Längsprofils (52) entsprechend dieser abgelesenen durchschnittlichen Abweichung berechnet.

## Fig.1

## Fig.2

## Fig.3

## Fig.4

Fig.5

Fig.6A
c1 = 0,02 ; c2 = 0,03

Fig.6B
c1 = 0,89 ; c2 = 1,67

Fig.6C
c1 = 0,65 ; c2 = 0,94

Fig.6D
c1 = 0,00 ; c2 = 0,00

Fig.6E
c1 = 2,72 ; c2 = 5,87

$Z_1$

$Y_1$

50

51

$X_1$

$P_1$

$P_2$

**Fig.7**

**Fig.8**

30

50

35  34  35

$Y_1, Y_2$

$X_1, X_2$

Fig.9

Fig.10

Fig.11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1642678 A
- EP 0750172 A